# EUROPEAN PATENT SPECIFICATION

(11) **EP 3 563 655 B1**
(45) Date of publication and mention of the grant of the patent: **14.09.2022**
(21) Application number: 17887060.6
(22) Date of filing: 26.12.2017
(51) Int. Cl.: A01D 34/00, A01D 34/81, A01D 101/00

(54) **MOWER**
MÄHER
FAUCHEUSE

(30) Priority: 27.12.2016 CN 201611230396; 03.02.2017 CN 201710063440; 03.02.2017 CN 201720106662 U
(43) Date of publication of application: 06.11.2019
(73) Proprietor: Skybest Electric Appliance (Suzhou) Co., Ltd., Jiangsu 215000 (CN)
(72) Inventor: WEI, Juan, Suzhou Jiangsu 215000 (CN); GU, Liang, Suzhou Jiangsu 215000 (CN)
(74) Representative: Neilson, Martin Mark
(86) International application number: PCT/CN2017/118440
(87) International publication number: WO 2018/121492

(56) References cited:
- EP-A1- 1 749 431
- EP-A1- 2 499 894
- CN-A- 1 446 446
- CN-A- 101 904 246
- CN-A- 102 273 355
- CN-U- 206 611 789
- JP-A- H09 252 625
- US-A- 6 038 842

## Description

The present disclosure relates to a mower.

A grass outlet at the rear or lateral side of a mower body is generally provided with a safety baffle to cover the grass outlet to meet the safety requirements. When the mower is mowing, the safety baffle has two states. Taking the mower with a rear grass outlet as an example, in the first state, the safety baffle is opened to provide sufficient space for the rear of the grass outlet for installing a collection bag, which is installed at the rear of the grass outlet, so that the grass debris discharged from the grass outlet is received into the collection bag; in the second state, the safety baffle is closed so as to reduce an overall size of the mower for storage or transportation purposes. Since the above-mentioned mower with a rear grass outlet may also be used when the collection bag is not installed, which requires that the safety baffle when closed cannot totally close the grass outlet. Rather, a grass discharge channel should be provided at the lower rear of the grass outlet so as to discharge the grass debris discharged from the grass outlet to the ground at the lower rear. This, however, will cause the safety baffle to exceed out of the contour of the whole machine, resulting in the mower to take up more space in storage and transportation.

EP-A-1749431 discloses a vegetation cutter apparatus.

The technical problem to be solved by the present disclosure is to provide a mower that not only satisfies the grass discharge requirements with or without a collection bag, but also reduces the space occupied by the mower when in storage state.

In order to solve the above technical problem, the present invention from one aspect provides a mower including a housing and a cover plate pivotally connected to the housing, wherein the housing includes a grass outlet and the cover plate is configured to selectively open or close the grass outlet, wherein in a first state, a free end of the cover plate is away from the grass outlet thus providing an installation space for a collection bag and in a third state, the cover plate is received within an outer contour of the housing, wherein the cover pivots along a pivotal rotation path between the first state and the third state, wherein at least one side of the grass outlet is provided with a limit portion which defines a second width on the pivotal rotation path, wherein the second width is smaller than the width of the cover plate, wherein in a second state, the cover plate abuts against a top of the limit portion, wherein the cover plate in a deformed state has a temporary width smaller than the second width.

Preferably the cover plate is made of an elastic material.

Preferably the housing includes a rear wall, a pair of lateral walls and a bottom wall, and the pair of lateral walls and the bottom wall extend rearward beyond the rear wall; the grass outlet is provided on the rear wall, and the limit portion is provided on the lateral wall; and the cover plate has a pivot end away from the free end, and the pivot end is pivotally connected to the rear top end of the housing.

Preferably the grass outlet is disposed on the rear wall and biased to one side of the lateral wall; and the limit portion is disposed on the lateral wall which is away from a side of the grass outlet, or is symmetrically disposed on each wall of the pair of lateral walls. Preferably, the limit portion is configured as a strip-shaped protrusion or a point-shaped protrusion.

In order to solve the above technical problem, the present invention from a further aspect provides a mower includes a housing and a cover plate pivotally connected to the housing, wherein the housing includes a grass outlet and the cover plate is configured to selectively open or close the grass outlet, wherein in a first state, the free end of the cover plate is away from the grass outlet and provides an installation space for a collection bag and in a third state, the cover plate is received within the outer contour of the housing, wherein the cover pivots along a pivotal rotation path between the first state and the third state, wherein a limit portion is provided on the side of the housing relative to the grass outlet and defines a second width on the pivotal rotation path, wherein the second width is not less than the width of the cover plate, wherein the cover plate has a first position in the width direction thereof adjacent to the limit portion and a second position in the width direction thereof away from the limit portion, wherein in the first position, the rotation of the cover plate is limited by the limit portion and in the second position, the rotation of the cover plate is not limited by the limit portion, wherein in a second state, the cover plate abuts against a top of the limit portion

Preferably an elastic member is disposed between the housing and the cover plate, and operative to provide the cover plate an elastic force to maintain it in the first position.

Preferably the cover plate has a pivot end away from the free end; the pivot end includes at least one first connecting portion, and the housing includes a second connecting portion corresponding to the first connecting portion, and the first connecting portion is pivotally connected to the second connecting portion.

Preferably the first connecting portion is configured to be ear-shaped, and the second connecting portion is configured to be concave -shaped; the first connecting portion and the second connecting portion are pivotally connected by a rotating shaft; the mower further has a third width, which is not less than the width of the limit portion; the third width is defined as a preset moving distance of the first connecting portion relative to the second connecting portion along an axis of the rotating shaft.

Preferably an elastic member is disposed between the first connecting portion and the second connecting portion along the extending direction of the rotating shaft.

The technical effect that can be achieved by the present invention is that, the mower of the present invention can not only satisfy the grass discharge requirements with or without the collection bag, but also reduce the space occupied by the mower when in storage state, and has a simple structure and is easy to operate.

### BRIEF DESCRIPTION OF DRAWINGS

FIG. 1 is a rear view illustrating a housing of a mower according to the present disclosure;
FIG. 2 is a top view illustrating the housing of the mower according to the present disclosure;
FIG. 3 is a side view illustrating the Embodiment 1 in the second state according to the present disclosure;
FIG. 4 is a rear view illustrating the Embodiment 1 in the second state according to the present disclosure;
FIG. 5 is a side view illustrating the Embodiment 1 in the third state according to the present disclosure;
FIG. 6 is a rear view illustrating the Embodiment 1 in the third state according to the present disclosure;
FIG. 7 is a side view illustrating the Embodiment 1 in the first state according to the present disclosure;
FIG. 8 is a rear view illustrating the Embodiment 2 in the first state according to the present disclosure;
FIG. 9 is an enlarged view of the portion marked as 'a' of FIG. 8;
FIG. 10 is a cross-sectional view of FIG. 8;
FIG. 11 is a rear view illustrating the Embodiment 2 in the second state according to the present disclosure;
FIG. 12 is a cross-sectional view of FIG. 11;
FIG. 13 is a rear view illustrating a transition state between the second state and the third state according to the present disclosure;
FIG. 14 is an enlarged view of the portion marked as 'b' of FIG. 13;
FIG. 15 is a cross-sectional view of FIG. 13;
FIG. 16 is a rear view illustrating the Embodiment 2 in the third state according to the present disclosure;
FIG. 17 is an enlarged view of the portion marked as 'c' of FIG. 16;
FIG. 18 is a cross-sectional view of FIG. 16;
FIG. 19 is a rear view illustrating the Embodiment 3 in the first state according to the present disclosure;
FIG. 20 is a cross-sectional view of FIG. 19.
FIG. 21 is a rear view illustrating the Embodiment 3 in the second state according to the present disclosure;
FIG. 22 is a cross-sectional view of FIG. 21;
FIG. 23 is a rear view illustrating Embodiment 4 in the third state according to the present disclosure; and
FIG. 24 is a cross-sectional view of FIG. 23.

### DETAILED DESCRIPTION

### Embodiment 1

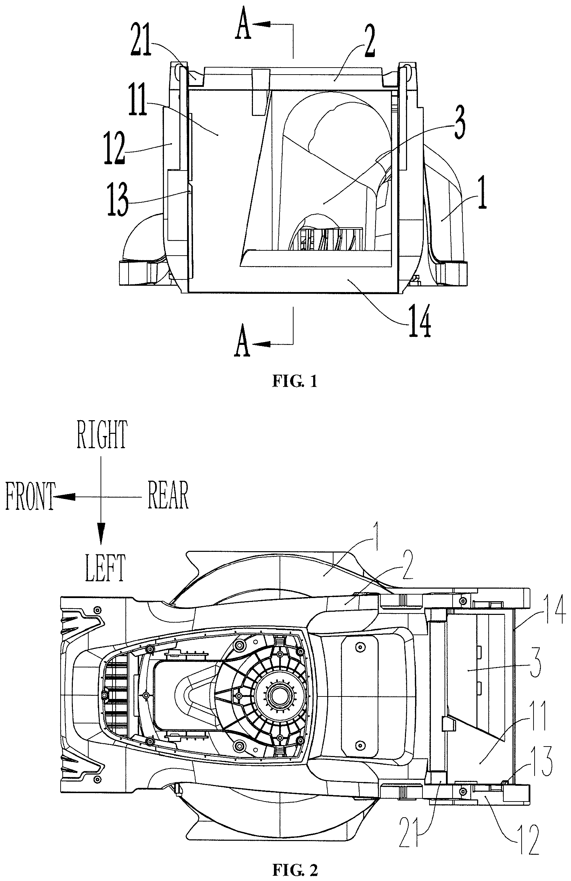

As illustrated in FIG. 1 to FIG. 7, the present embodiment provides a walk-behind mower with a rear grass outlet that includes a main body, walking wheels disposed at the bottom of the main body, and a push rod that is connected to the main body and that extends backward. Typically, the push rod is folding or telescopic. The main body includes a housing 5, which is composed of a chassis 1 and an upper cover 2 installed above the chassis 1. The mowing mechanism and the control mechanism of the mower are installed inside the housing 5. Specifically, the mowing mechanism and the control mechanism are installed on the chassis 1. The mowing mechanism includes a mowing blade and a driver for driving the mowing blade into motion, and the driver is generally an electric motor or an internal combustion engine. Accordingly, the mower is further provided with a power source or a fuel tank. The driver is generally disposed inside the housing 5, and the mowing blade is connected to an output shaft of the driver and extends out from the bottom of the housing. The control mechanism is generally a Printed circuit board or a microprocessor, and controls the action of the mower according to the manipulation of operators or a preset program.

As illustrated in FIG. 1 to FIG. 2, the housing has a rear wall lies substantially in a vertical plane and a pair of side walls 12. The rear wall 11 is located at the rear of the main body and extends in the left-right direction. The pair of side walls 12 are respectively located on the left and right sides of the housing and extend in the front-rear direction. The housing further has a bottom wall 14 that is generally in a horizontal plane. In the present embodiment, all of the rear wall 11, the pair of side walls 12, and the bottom wall 14 are components of the chassis 1. For the mower with the rear grass outlet described in the present embodiment, the "rear" refers to the direction away from the advancing direction of the mower, and correspondingly, "front" refers to the advancing direction of the mower, "left" refers to the left-hand direction facing forward, and "right" refers to the right-hand direction facing forward. Those skilled in the art can understand that in the other embodiments of the mower, taking a center of the mower body as a reference, "back" or "rear" refers to a direction to near the grass outlet, and accordingly, the "front" refers to a direction away from the grass outlet. A grass outlet 3 is provided on the rear wall 11 of the housing, and the grass debris cut by the mowing mechanism are discharged from the mower via the grass outlet 3. In the present embodiment, the grass outlet 3 is disposed on the rear wall 11 and biased to the right side. The left and right lateral walls 12 and the bottom wall 14 extend rearward beyond the plane of the rear wall 11, and a semi-enclosed cavity is formed behind the rear wall 11 for installing the collection bag.

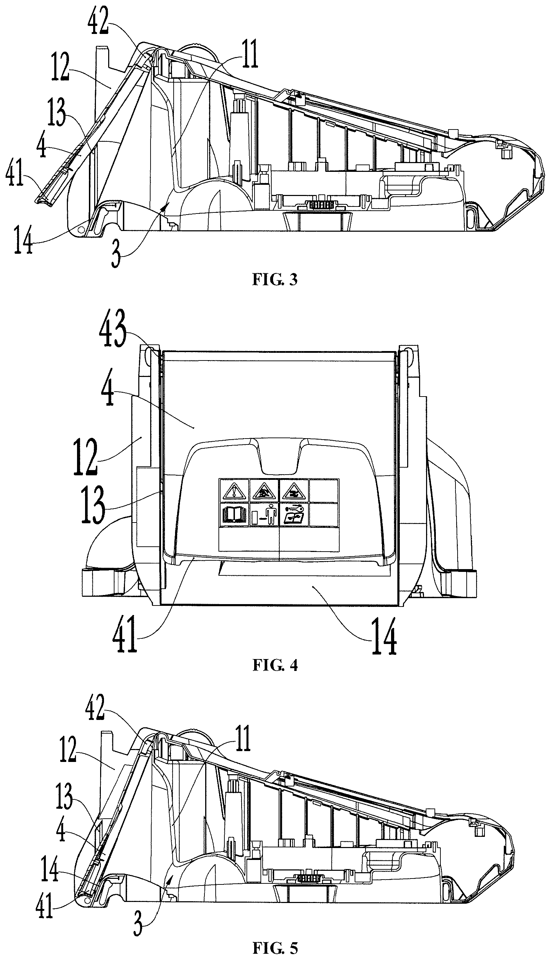

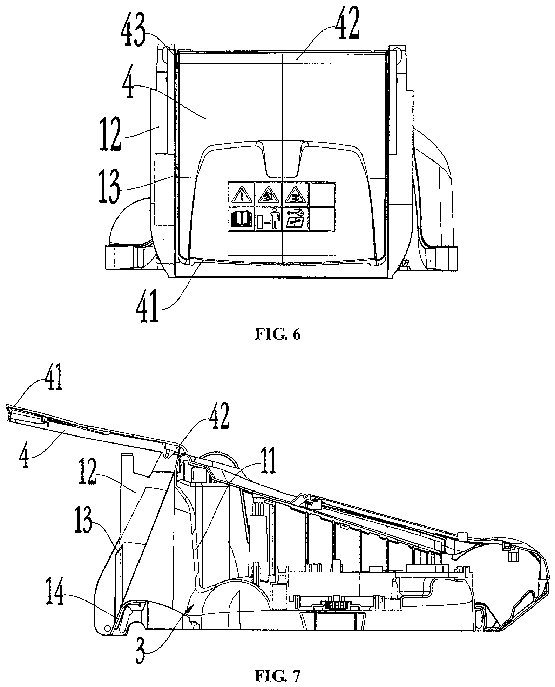

As illustrated in FIGS. 3-7, a cover plate 4 is further provided at the rear end of the housing, and has a free end 41 and a pivot end 42 opposite to the free end 41. The pivot end 42 is pivotally connected to the top position of the rear end of the housing. In the present embodiment, the pivot end 42 has at least one first connecting portion 44, and the top position of the rear end of the housing has a second connecting portion 21 corresponding to the first connecting portion 44, and the first connecting portion 44 and the second connecting portion 21 are connected by a rotating shaft 43 extending in the left-right direction, and the cover plate 4 is rotatable about the rotating shaft 43, so that the cover plate 4 can selectively open or cover the grass outlet 3. Specifically, the first connecting portion 44 is ear-shaped and protrudes from the cover plate 4, and the second connecting portion 21 is a concave-shaped on the chassis 1 or the upper cover 2. Certainly, in other embodiments, the first connecting portion 44 and the second connecting portion 21 may employ other connecting structures as long as the cover plate 4 can be rotated about a rotation axis. The limit portion 13 is provided at the rear end of the side wall 12 on the left side. For convenience of manufacture, in the present embodiment, the limit portion 13 is configured as a strip-shaped protrusion on the left side wall 12 extending substantially in a up and down direction. The width defined between the left side wall 12 and the right side wall 12 is a first width *W*₁, and the width defined between the limit portion 13 and the right lateral wall 12 is a second width *W*₂, and the width of the cover plate 4 is *W*₀ (*W*₀ is the width of the cover plate 4 in a natural state, that is, in the case of no external force), then *W*₁ ≥ *W*₀ *> W*₂. The "width" as used herein and hereinafter means a length scale extending in the left-right direction. That is, the limit portion 13 defines the second width *W*₂ that is smaller than the width *W*₀ of the cover plate 4 in the path of the cover plate pivoting 4, and generally the width *W*₀ of the cover plate 4 is slightly smaller than the first width *W*₁. Due to the configuration of the limit portion 13, the cover plate 4 can selectively have three states. The first state is as illustrated in FIG. 7, the cover plate 4 is in a fully open state, wherein the free end 41 is far away from the rear end of the bottom wall 14, and the grass outlet 3 is exposed outside, and the cavity for installing the collection bag is completely opened, at this moment, the collection bag can be inserted into the cavity from the rear and connected to the mower. In this state, the grass debris discharged from the grass outlet 3 and directly enters the collection bag. In the second state as illustrated in FIG. 3 to FIG. 4, the lower surface of the cover plate 4 abuts against the upper end of the limit portion 13, so that the cover plate 4 partially cover the upper rear of the grass outlet 3, and a certain gap is formed between the cover plate 4 and the bottom wall 14, at this moment, the grass debris going out of the grass outlet 3 is directly discharged to the rear of the mower via the gap between the cover plate 4 and the bottom wall 14, and the upper rear of the grass outlet 13 is blocked, so that the safety of the operator is effectively protected. In the third state as illustrated in FIG. 5 to FIG. 6, the cover plate 4 passes over the upper end of the limit portion 13 from top to bottom, so that the cover plate 4 covers the grass outlet 3 and is not beyond the outer contour of the lateral wall 12, at this moment, the grass outlet 3 is covered to ensure safety, and the cover plate is within the outer contour of the housing to reduce the package size and is convenient for transportation or storage. Generally, a cover plate resetting member (not shown) is provided between the cover plate 4 and the rear wall 11, and gives the cover plate 4 a tendency to close the grass outlet 13, that is to make the cover plate 4 tend to enter the third state. Specifically, in the perspectives of FIGS. 3, 5, and 7, the cover plate resetting member makes the cover plate 4 tend to rotate in a counterclockwise direction. In some embodiments, the cover plate resetting member is a spring having one end fixed to the cover plate 4 and the other end fixed to the rear wall 11. In other embodiments, the cover plate resetting member is a torsion spring installed on the shaft 43.

In the present embodiment, the cover plate 4 is made of an elastic material. When switching between the second state and the third state, the operator needs to apply only a force from the left side to the right side of the cover plate 4, or apply a force from the left and right sides to the center to make the cover plate 4 a certain elastic deformation in the width direction thereof, and the width dimension of the deformed cover plate 4 (*i.e*., the temporary width of the cover plate 4) is smaller than the second width *W*₂ so as to be able to exceed the limit portion 13.

It will be apparent to those skilled in the art that, the technical effects of the present disclosure can also be achieved with the "left" and "right" partially or totally interchanged in the present embodiment.

### Embodiment 2

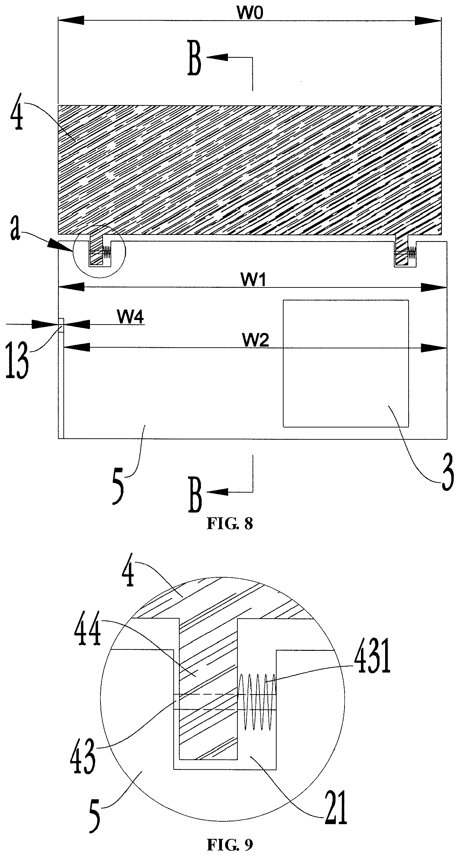

As illustrated in FIG. 8 - FIG. 18, the difference between the present embodiment and Embodiment 1 is that, an elastic member 431 is disposed between the first connecting portion 44 of the cover plate 4 and the second connecting portion 21 of the chassis 1 or the upper cover 2, and the elastic member 431 makes the cover plate 4 have a tendency to move toward the limit portion 13 along the rotation shaft 43. In the present embodiment, the material of the cover plate 4 may be selected as rigid material to enhance strength, and is not limited to be an elastic material.

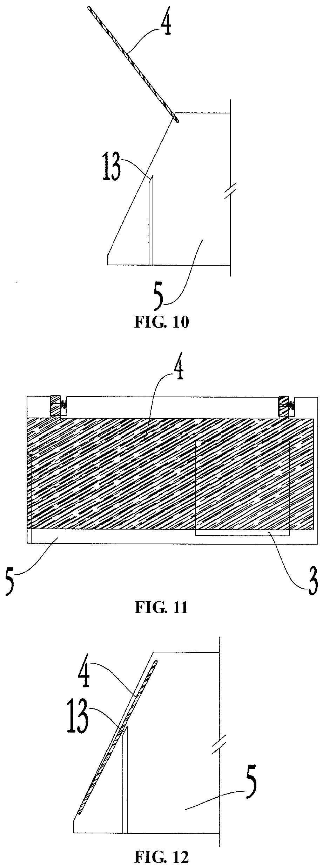

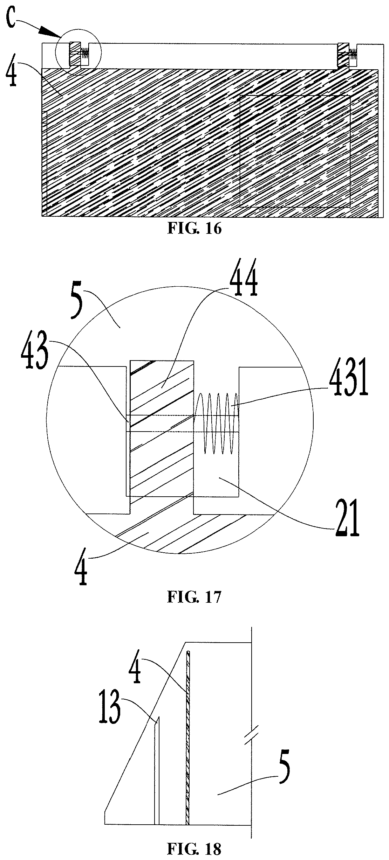

Specifically, in the first state as illustrated in FIG. 8 to FIG. 10, the cover plate 4 is totally opened, at this moment under the action of the elastic member 431, the first connecting portion 44 abuts against the left side of the second connecting portion 21, that is, the cover plate 4 as a whole is at the left side position. In the second state as illustrated in FIG. 11 to FIG. 13, since the limit portion 13 is disposed on the left lateral wall 12, the cover plate 4 is rotated downward, and a lower surface of the cover plate 4 abuts against the upper end of the limit portion 13, so that the cover plate 4 partially covers the upper rear of the grass outlet 3, and a certain gap is formed between the cover plate 4 and the bottom wall 14. In the third state as illustrated in FIG. 16 - FIG. 18, the cover plate 4 exceeds the upper end of the limit portion 13 from top to bottom, and covers the grass outlet 3.

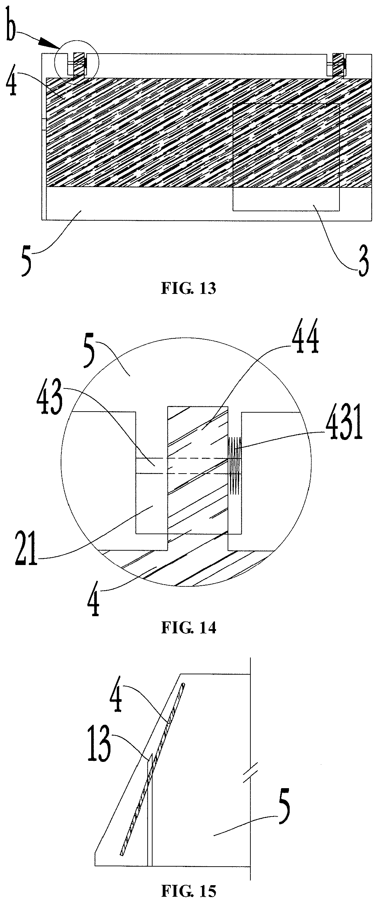

When switching between the second state and the third state, as illustrated in FIGS. 13 - 17, the operator only needs to provide the cover plate 4 a force to the right along the rotating shaft 43, the cover plate 4 overcomes the elastic force of the elastic member 431 and moves rightward away from the limit portion 13 along the rotating shaft 43 to the right side position, thereby enabling the cover plate 4 to exceed the limit portion 13. Specifically, the preset distance that the cover plate is movable along the axis of the rotating shaft 43 is the third width *W*₃, and the third width *W*₃ is not smaller than the width *W*₄ of the limit portion 13. At the same time, the width *W*₀ of the cover plate 4 is slightly smaller than the second width *W*₂, and the difference between the width *W*₀ of the cover plate 4 and the first width *W*₁ is not less than the width *W*₄ of the limit portion.

More specifically, the width of the first connecting portion 44 (i.e., the ear-shaped portion) is smaller than the width of the second connecting portion 21 (i.e., the concave-shaped portion). When the first connecting portion 44 is mated in the second connecting portion 21, the distance that the first connecting portion 44 can move axially along the rotating shaft 43 relative to the second connecting portion 21 is the third width *W*₃. A displacement variation amount of the first connecting portion 44 relative to the second connecting portion 21 with reference to FIGS. 9 and 14 is the third width *W*₃.

It will be apparent to those skilled in the art that, the technical effects of the present disclosure can also be achieved with the "left" and "right" partially or totally interchanged.

### Embodiment 3

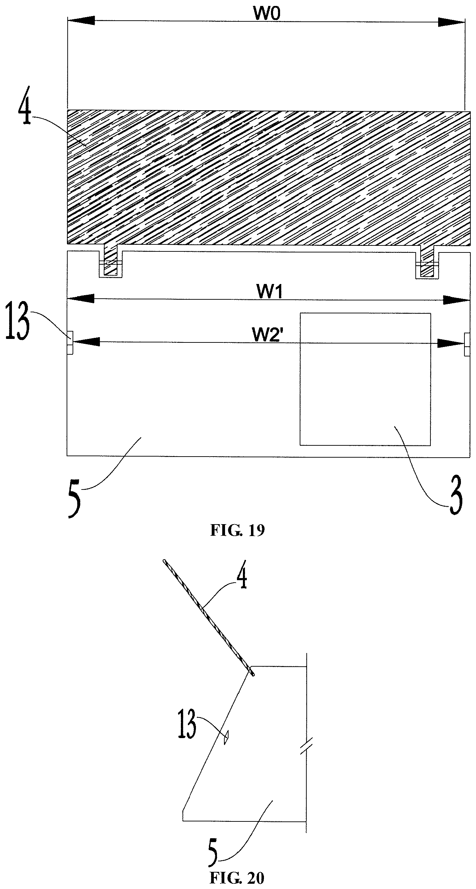

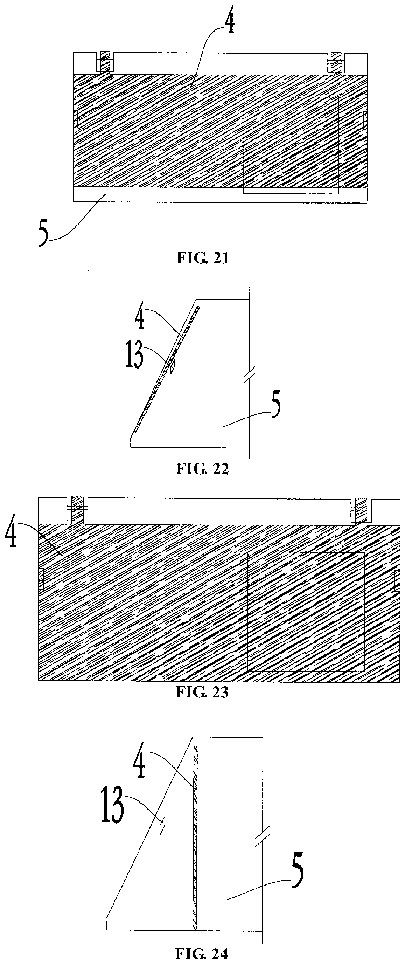

As illustrated in FIG. 19 - FIG. 24, the difference between the present embodiment and the Embodiment 1 is that there two limit portions 13, which are symmetrically disposed on the left and right side walls 12. The width defined between two limit portions 13 is the second width *W*₂', and *W*₁ ≥ *W*₀ > *W*₂'. The two symmetrical limit portions 13 define a second width *W*₂' which is smaller than the width *W*₀ of the cover plate 4 in the path of the cover plate pivoting 4.

In the present embodiment, the limit portion 13 is configured as a point-shaped protrusion. In the present embodiment, the cover plate 4 is made of an elastic material. When switching between the second state and the third state, the operator only needs to apply a force from the left and right sides to the center to make the cover plate 4 a certain elastic deformation in the width direction thereof, and the width dimension of the deformed cover plate 4 (*i.e*., the temporary width of the cover plate 4) is smaller than the second width *W*₂ so as be able to exceed the limit portion 13.

The drawings of the above-mentioned Embodiment 2 and Embodiment 3 are simplified schematic diagrams, and in order to highlight the main technical features of the present disclosure, the chassis 1, the upper cover 2 and the bottom wall 14 are not distinguished, and the grass outlet 3 is not indicated, which however does not mean that the above portions are not included in Embodiment 2 and Embodiment 3.

## Claims

1. A mower includes a housing and a cover plate (4) pivotally connected to the housing, wherein the housing includes a grass outlet (3) and the cover plate (4) is configured to selectively open or close the grass outlet (3), wherein in a first state, a free end (41) of the cover plate (4) is away from the grass outlet (3) thus providing an installation space for a collection bag and in a third state, the cover plate (4) is received within an outer contour of the housing, wherein the cover (4) pivots along a pivotal rotation path between the first state and the third state, **characterized in that** at least one side of the grass outlet (3) is provided with a limit portion (13) which defines a second width (W2, W2') on the pivotal rotation path, wherein the second width (W2, W2') is smaller than the width (W0) of the cover plate (4), wherein in a second state, the cover plate (4) abuts against a top of the limit portion (13), wherein the cover plate (4) in a deformed state has a temporary width smaller than the second width (W2, W2').

2. A mower in accordance with claim 1, wherein the cover plate (4) is made of an elastic material.

3. A mower in accordance with claim 1, wherein the housing includes a rear wall (11), a pair of lateral walls (12) and a bottom wall (14), wherein the pair of lateral walls (12) and the bottom wall (14) extend rearwardly beyond the rear wall (11).

4. A mower in accordance with claim 3, wherein the grass outlet (3) is provided on the rear wall (11).

5. A mower in accordance with claim 3, wherein the limit portion (13) is provided on the lateral wall (12).

6. A mower in accordance with any one of claim 1 to claim 5, wherein the cover plate (4) has a pivot end (42) away from the free end (41) and the pivot end (42) is pivotally connected to the rear top end of the housing.

7. A mower in accordance with claim 3, wherein the grass outlet (3) is disposed on the rear wall and biased to one side of the lateral wall (12).

8. A mower in accordance with claim 7, wherein only one limit portion (13) is disposed on the lateral wall (12) which is away from a side of the grass outlet (3).

9. A mower in accordance with any one of claim 3 to claim 5, wherein two limit portions (13) are symmetrically disposed on each one of the pair of lateral walls (12).

10. A mower in accordance with claim 1, wherein the limit portion (13) is configured as a strip-shaped protrusion or a point-shaped protrusion.

11. A mower includes a housing and a cover plate (4) pivotally connected to the housing, wherein the housing includes a grass outlet (3) and the cover plate (4) is configured to selectively open or close the grass outlet (3), wherein in a first state, a free end (41) of the cover plate (4) is away from the grass outlet (3) and provides an installation space for a collection bag and in a third state, the cover plate (4) is received within the outer contour of the housing, wherein the cover (4) pivots along a pivotal rotation path between the first state and the third state, **characterized in that** a limit portion (13) is provided on the side of the housing relative to the grass outlet (3) and defines a second width (W2, W2') on the pivotal rotation path, wherein the second width (W2, W2') is not less than the width (W0) of the cover plate (4), wherein the cover plate (4) has a first position in the width direction thereof adjacent to the limit portion (13) and a second position in the width direction thereof away from the limit portion (13), wherein in the first position, the rotation of the cover plate (4) is limited by the limit portion (13) and in the second position, the rotation of the cover plate (4) is not limited by the limit portion (13), wherein in a second state, the cover plate (4) abuts against a top of the limit portion (13).

12. A mower in accordance with claim 11, wherein an elastic member (431) is disposed between the housing and the cover plate (4) and provides the cover plate (4) with an elastic force to maintain it in the first position.

13. A mower in accordance with claim 12, wherein the cover plate (4) has a pivot end (42) away from the free end (41), wherein the pivot end (42) includes at least one first connecting portion (44) and the housing includes a second connecting portion (21) corresponding to the first connecting portion (44), wherein the first connecting portion (44) is pivotally connected to the second connecting portion (21).

14. A mower in accordance with claim 13, wherein the first connecting portion (44) is configured to be ear-shaped and the second connecting portion (21) is configured to be concave -shaped, wherein the first connecting portion (44) and the second connecting portion (21) are pivotally connected by a rotating shaft (43), wherein the mower further has a third width (W3) which is not less than the width (W4) of the limit portion (13), wherein the third width (W3) is defined as a preset moving distance of the first connecting portion (44) relative to the second connecting portion (21) along an axis of the rotating shaft (43).

15. A mower in accordance with claim 14, wherein an elastic member (431) is disposed between the first connecting portion (44) and the second connecting portion (21) along the extending direction of the rotating shaft (431).

## Patentansprüche

1. Mäher, der ein Gehäuse und eine Abdeckplatte (4) aufweist, die drehbar mit dem Gehäuse verbunden ist, wobei das Gehäuse einen Grasauslass (3) aufweist und die Abdeckplatte (4) ausgestaltet ist, um den Grasauslass (3) wahlweise zu öffnen oder zu schließen, wobei in einem ersten Zustand ein freies Ende (41) der Abdeckplatte (4) von dem Grasauslass (3) entfernt ist, wodurch ein Installationsraum für einen Sammelbeutel bereitgestellt wird, und in einem dritten Zustand die Abdeckplatte (4) innerhalb einer Außenkontur des Gehäuses aufgenommen ist, wobei sich die Abdeckung (4) entlang eines Schwenkdrehweges zwischen dem ersten Zustand und dem dritten Zustand dreht, **dadurch gekennzeichnet, dass** mindestens eine Seite des Grasauslasses (3) mit einem Begrenzungsabschnitt (13) versehen ist, der eine zweite Breite (W2, W2') auf dem Schwenkdrehweg definiert, wobei die zweite Breite (W2, W2') kleiner als die Breite (W0) der Abdeckplatte (4) ist, wobei die Abdeckplatte (4) in einem zweiten Zustand gegen eine Oberseite des Begrenzungsabschnitts (13) stößt, wobei die Abdeckplatte (4) in einem verformten Zustand eine temporäre Breite aufweist, die kleiner als die zweite Breite (W2, W2') ist.

2. Mäher nach Anspruch 1, wobei die Abdeckplatte (4) aus einem elastischen Material gefertigt ist.

3. Mäher nach Anspruch 1, wobei das Gehäuse eine Rückwand (11), ein Paar von Seitenwänden (12) und eine Bodenwand (14) aufweist, wobei sich das Paar von Seitenwänden (12) und die Bodenwand (14) nach hinten über die Rückwand (11) hinaus erstrecken.

4. Mäher nach Anspruch 3, wobei der Grasauslass (3) an der Rückwand (11) vorgesehen ist.

5. Mäher nach Anspruch 3, wobei der Begrenzungsabschnitt (13) an der Seitenwand (12) vorgesehen ist.

6. Mäher nach einem der Ansprüche 1 bis 5, wobei die Abdeckplatte (4) ein von dem freien Ende (41) entferntes Drehende (42) aufweist und das Drehende (42) drehbar mit dem hinteren oberen Ende des Gehäuses verbunden ist.

7. Mäher nach Anspruch 3, wobei der Grasauslass (3) an der Rückwand angeordnet und zu einer Seite der Seitenwand (12) vorgespannt ist.

8. Mäher nach Anspruch 7, wobei nur ein Begrenzungsabschnitt (13) an der Seitenwand (12) angeordnet ist, der von einer Seite des Grasauslasses (3) entfernt ist.

9. Mäher nach einem der Ansprüche 3 bis 5, wobei zwei Begrenzungsabschnitte (13) symmetrisch an jeder von dem Paar von Seitenwänden (12) angeordnet sind.

10. Mäher nach Anspruch 1, wobei der Begrenzungsabschnitt (13) als ein streifenförmiger Vorsprung oder ein punktförmiger Vorsprung ausgestaltet ist.

11. Mäher, der ein Gehäuse und eine Abdeckplatte (4) aufweist, die drehbar mit dem Gehäuse verbunden ist, wobei das Gehäuse einen Grasauslass (3) aufweist und die Abdeckplatte (4) ausgestaltet ist, um den Grasauslass (3) wahlweise zu öffnen oder zu schließen, wobei in einem ersten Zustand ein freies Ende (41) der Abdeckplatte (4) von dem Grasauslass (3) entfernt ist und einen Installationsraum für einen Sammelbeutel bereitstellt und in einem dritten Zustand die Abdeckplatte (4) innerhalb der Außenkontur des Gehäuses aufgenommen ist, wobei sich die Abdeckung (4) entlang eines Schwenkdrehweges zwischen dem ersten Zustand und dem dritten Zustand dreht,
**dadurch gekennzeichnet, dass** ein Begrenzungsabschnitt (13) an der Seite des Gehäuses in Bezug auf den Grasauslass (3) vorgesehen ist und eine zweite Breite (W2, W2') auf dem Schwenkdrehweg definiert, wobei die zweite Breite (W2, W2') nicht kleiner als die Breite (W0) der Abdeckplatte (4) ist, wobei die Abdeckplatte (4) eine erste Position in der Breitenrichtung davon benachbart zu dem Begrenzungsabschnitt (13) und eine zweite Position in der Breitenrichtung davon entfernt von dem Begrenzungsabschnitt (13) aufweist, wobei in der ersten Position die Drehung der Abdeckplatte (4) durch den Begrenzungsabschnitt (13) begrenzt ist und in der zweiten Position die Drehung der Abdeckplatte (4) nicht durch den Begrenzungsabschnitt (13) begrenzt ist, wobei in einem zweiten Zustand die Abdeckplatte (4) gegen eine Oberseite des Begrenzungsabschnitts (13) stößt.

12. Mäher nach Anspruch 11, wobei ein elastisches Element (431) zwischen dem Gehäuse und der Abdeckplatte (4) angeordnet ist und die Abdeckplatte (4) mit einer elastischen Kraft beaufschlagt, um sie in der ersten Position zu halten.

13. Mäher nach Anspruch 12, wobei die Abdeckplatte (4) ein von dem freien Ende (41) entferntes Drehende (42) aufweist, wobei das Drehende (42) mindestens einen ersten Verbindungsabschnitt (44) aufweist und das Gehäuse einen zu dem ersten Verbindungsabschnitt (44) korrespondierenden zweiten Verbindungsabschnitt (21) aufweist, wobei der erste Verbindungsabschnitt (44) drehbar mit dem zweiten Verbindungsabschnitt (21) verbunden ist.

14. Mäher nach Anspruch 13, wobei der erste Verbindungsabschnitt (44) ausgestaltet ist, um ohrenförmig zu sein, und der zweite Verbindungsabschnitt (21) ausgestaltet ist, um konkavförmig zu sein, wobei der erste Verbindungsabschnitt (44) und der zweite Verbindungsabschnitt (21) drehbar mittels einer Drehwelle (43) verbunden sind, wobei der Mäher ferner eine dritte Breite (W3) aufweist, die nicht kleiner als die Breite (W4) des Begrenzungsabschnitts (13) ist, wobei die dritte Breite (W3) als ein voreingestellter Bewegungsabstand des ersten Verbindungsabschnitts (44) in Bezug auf den zweiten Verbindungsabschnitt (21) entlang einer Achse der Drehwelle (43) definiert ist.

15. Mäher nach Anspruch 14, wobei ein elastisches Element (431) zwischen dem ersten Verbindungsabschnitt (44) und dem zweiten Verbindungsabschnitt (21) entlang der Erstreckungsrichtung der Drehwelle (431) angeordnet ist.

## Revendications

1. Faucheuse comprenant un boîtier et une plaque de couvercle (4) raccordée de manière pivotante au boîtier, dans laquelle le boîtier comprend une sortie d'herbe (3) et la plaque de couvercle (4) est configurée pour ouvrir ou fermer sélectivement la sortie d'herbe (3), dans laquelle, dans un premier état, une extrémité libre (41) de la plaque de couvercle (4) est à l'opposé de la sortie d'herbe (3), fournissant ainsi un espace d'installation pour un sac de collecte et dans un troisième état, la plaque de couvercle (4) est reçue dans un contour externe du boîtier, dans laquelle le couvercle (4) pivote le long d'une trajectoire de rotation pivotante entre le premier état et le troisième état,
**caractérisée en ce qu'**au moins un côté de la sortie d'herbe (3) est prévu avec une partie de limite (13) qui définit une deuxième largeur (W2, W2') sur la trajectoire de rotation pivotante, dans laquelle la deuxième largeur (W2, W2') est inférieure à la largeur (W0) de la plaque de couvercle (4), dans laquelle, dans un deuxième état, la plaque de couvercle (4) vient en butée contre une partie supérieure de la partie de limite (13), dans laquelle la plaque de couvercle (4), dans un état déformé, a une largeur temporaire inférieure à la deuxième largeur (W2, W2').

2. Faucheuse selon la revendication 1, dans laquelle la plaque de couvercle (4) est réalisée avec un matériau élastique.

3. Faucheuse selon la revendication 1, dans laquelle le boîtier comprend une paroi arrière (11), une paire de parois latérales (12) et une paroi inférieure (14), dans laquelle la paire de parois latérales (12) et la paroi inférieure (14) s'étendent vers l'arrière au-delà de la paroi arrière (11).

4. Faucheuse selon la revendication 3, dans laquelle la sortie d'herbe (3) est prévue sur la paroi arrière (11).

5. Faucheuse selon la revendication 3, dans laquelle la partie de limite (13) est prévue sur la paroi latérale (12) .

6. Faucheuse selon l'une quelconque des revendications 1 à 5, dans laquelle la plaque de couvercle (4) a une extrémité de pivot (42) à l'opposé de l'extrémité libre (41) et l'extrémité de pivot (42) est raccordée de manière pivotante à l'extrémité supérieure arrière du boîtier.

7. Faucheuse selon la revendication 3, dans laquelle la sortie d'herbe (3) est disposée sur la paroi arrière et sollicitée vers un côté de la paroi latérale (12).

8. Faucheuse selon la revendication 7, dans laquelle seule une partie de limite (13) est disposée sur la paroi latérale (12) qui est à l'opposé d'un côté de la sortie d'herbe (3).

9. Faucheuse selon l'une quelconque des revendications 3 à 5, dans laquelle deux parties de limite (13) sont disposées symétriquement sur chacune de la paire de parois latérales (12).

10. Faucheuse selon la revendication 1, dans laquelle la partie de limite (13) est configurée comme une saillie en forme de bande ou une saillie en forme de point.

11. Faucheuse comprenant un boîtier et une plaque de couvercle (4) raccordée de manière pivotante au boîtier, dans laquelle le boîtier comprend une sortie d'herbe (3) et la plaque de couvercle (4) est configurée pour ouvrir ou fermer sélectivement la sortie d'herbe (3), dans laquelle, dans un premier état, une extrémité libre (41) de la plaque de couvercle (4) est à l'opposé de la sortie d'herbe (3) et fournit un espace d'installation pour un sac de collecte et dans un troisième état, la plaque de couvercle (4) est reçue dans le contour externe du boîtier, dans laquelle le couvercle (4) pivote le long d'une trajectoire de rotation pivotante entre le premier état et le troisième état, **caractérisée en ce qu'**une partie de limite (13) est prévue sur le côté du boîtier par rapport à la sortie d'herbe (3) et définit une deuxième largeur (W2, W2') sur la trajectoire de rotation pivotante, dans laquelle la deuxième largeur (W2, W2') n'est pas inférieure à la largeur ((W0) de la plaque de couvercle (4), dans laquelle la plaque de couvercle (4) a une première position dans sa direction de largeur adjacente à la partie de limite (13) et une seconde position dans sa direction de largeur à l'opposé de la partie de limite (13), dans laquelle, dans la première position, la rotation de la plaque de couvercle (4) est limitée par la partie de limite (13), et dans la deuxième position, la rotation de la plaque de couvercle (4) n'est pas limitée par la partie de limite (13), dans laquelle dans un deuxième état, la plaque de couvercle (4) vient en butée contre une partie supérieure de la partie de limite (13).

12. Faucheuse selon la revendication 11, dans laquelle un élément élastique (431) est disposé entre le boîtier et la plaque de couvercle (4) et dote la plaque de couvercle (4) d'une force élastique pour la maintenir dans la première position.

13. Faucheuse selon la revendication 12, dans laquelle la plaque de couvercle (4) a une extrémité de pivot (42) à l'opposé de l'extrémité libre (41), dans laquelle l'extrémité de pivot (42) comprend au moins une première partie de raccordement (44) et le boîtier comprend une seconde partie de raccordement (21) correspondant à la première partie de raccordement (44), dans laquelle la première partie de raccordement (44) est raccordée, de manière pivotante, à la seconde partie de raccordement (21) .

14. Faucheuse selon la revendication 13, dans laquelle la première partie de raccordement (44) est configurée pour être en forme d'oreille et la seconde partie de raccordement (21) est configurée pour être de forme concave, dans laquelle la première partie de raccordement (44) et la seconde partie de raccordement (21) sont raccordées, de manière pivotante, par un arbre rotatif (43), dans laquelle la faucheuse a en outre une troisième largeur (W3) qui n'est pas inférieure à la largeur (W4) de la partie de limite (13), dans laquelle la troisième largeur (W3) est définie comme une distance de déplacement prédéterminée de la première partie de raccordement (44) par rapport à la seconde partie de raccordement (21) le long d'un axe de l'arbre de rotation (43).

15. Faucheuse selon la revendication 14, dans laquelle un élément élastique (431) est disposé entre la première partie de raccordement (44) et la seconde partie de raccordement (21) le long de la direction d'extension de l'arbre de rotation (431).
